# EUROPEAN PATENT SPECIFICATION

(11) **EP 2 233 451 B1**
(45) Date of publication and mention of the grant of the patent: **20.11.2013**
(21) Application number: 10155613.2
(22) Date of filing: 05.03.2010
(51) Int. Cl.: C04B 37/00, C23C 28/02

(54) **Multilayer thermal protection system and its use**
Mehrlagiges thermisches Schutzsystem und deren Verwendung
Système de protection thermique multicouches et utilisation d' un tel

(30) Priority: 27.03.2009 EP 09156515
(43) Date of publication of application: 29.09.2010
(73) Proprietor: Alstom Technology Ltd, 5400 Baden (CH)
(72) Inventor: Bossmann, Hans-Peter, D-79787, Lauchringen (DE); Bachegowda, Sharath, CH-5408, Ennetbaden (CH); Esquerre, Matthieu, CH-5432, Neuenhof (CH); Iten, Rico, CH-5400, Baden (CH)

(56) References cited:
- EP-A- 1 674 663
- EP-A- 1 806 435
- EP-A2- 2 108 715
- US-A- 5 630 314
- US-A- 5 683 761
- US-A1- 2003 207 155
- US-A1- 2004 076 810
- US-A1- 2006 280 954

## Description

### TECHNICAL FIELD

The present invention relates to the field of thermal barrier coatings (TBC) as used in particular for the protection of components exposed to the hot gas path of machines such as gas turbines.

### PRIOR ART

Gas turbines (GT) are increasingly requested to have higher efficiencies and this is normally achieved primarily through increase of the firing temperature up to 1750°C at least for very short periods of time and reduced cooling effort to the GT components. These components in addition to handling the high temperatures should also be able to cope with harsh GT environments for extended periods of time (operating hours > 24000h).

There are the following main approaches to produce thermal barrier coating systems that are capable of handling high temperatures and harsh environments:
1. Base Metal/Bondcoat (BC)/ Thermal Barrier Coating (TBC)
2. Base Metal/BC/TBC/ Environmental Barrier Coating (EBC)
3. Ceramic matrix composites (CMC)
   a) Oxide CMC + High Temperature Insulation
   b) Non-Oxide CMC + EBC
4. Free standing hybrid ceramic structures such as e.g. disclosed in US 2003/0207155

The temperature capability Tₘₐₓ of materials is defined specifically for industrial gas turbine application as the maximum possible surface temperature for 24000h in gas turbine combustion gas environment without significant loss of functionality (e.g. reduced thermal barrier effect due to spallation, strain tolerance due sintering, degradation due to environmental attack of combustion gas constituents, thermal phase stability).

Tₘₐₓ of state of the art TBC systems with about 7 wt% Yttria Stabilized Zirconia (7YSZ) have been determined to be <1150°C because of sintering behaviour which results in higher stiffness and lower strain tolerance for thermal cycling (start-stop-cycle of the turbine). Also the thermal phase stability of YSZ is limited to about 1100°C for long-term operation. Tₘₐₓ for the environmental attack due to Ca-compound form the combustion gas was determined to be around 1200°C.

As all these degradation processes are thermally activated (exponential growth of reaction rates) Tₘₐₓ is defined as that temperature where significant material degradation compared to virgin material occurs.

The quantification of degradation can be done by state of the art test and evaluation tools, e.g. X-ray diffraction, Knoop hardness, SEM, dilatometer, etc.

The limitations of this prior art coating systems can essentially be summarised as follows:
1. Current BC/TBC systems that are based on MCrAlY / 7 wt% Yttria Stabilized Zirconia (7YSZ) have reached their limits in terms of both temperature capability and their ability to withstand severe GT environments. The upper temperatures of these systems are reaching their limit and are prone to attack by contaminants in the fuel such as Vanadium and environmental contaminants such as Calcium Magnesium Alumino Silicate (CMAS).
2. TBC/EBC systems comprised of dual/graded layers of ceramics that are functionally separated, wherein the TBC provides the temperature protection and the EBC is intended to protect the TBC from the harsh environments of the GT. These systems are still based on the conventional BC/TBC design with an additional thin coating forming the EBC layer.
3a. Oxide based CMCs are limited in terms of temperature capability and need to be protected with a high temperature insulating layer. The oxide based CMCs have a temperature capability of 1100°C, with the application of thermal insulating layers, Mullite (Alumino Silicate) based systems are known which are highly porous and capable of handling temperatures up to 1400°C for long term applications. They do not require an additional EBC since the CMC materials is resistant against environmental attack. Tₘₐₓ seems to be limited to <1200°C for such systems due to low strain tolerance caused by sintering of fibre and matrix, resulting in insufficient thermal cycling behavior for long-term operation.
3b. Non-Oxide based CMC are capable of handling the highest temperatures (1600°C). However they are susceptible to attack by GT environment (specifically recession by the action of water vapor) and need to be protected with an EBC. These systems can withstand the severe GT atmospheres when protected by an EBC layer however, after more than one decade of developments, the corrosion problem is still not fully solved, since any crack in the EBC can lead to the complete failure of the component.

Document EP 1 806 435 discloses, on a metallic substrate, a bond coat, and on this a so-called inner layer based on a ceramic material, followed by an outer layer also based on a ceramic material. Optionally on this outermost layer additionally an alumina layer may be provided. There is no disclosure of applying prefabricated monolithic ceramic elements in the context of making such a layer structure.

US 2006/280954 relates to layer structures on silicon containing substrates, and not on metal based substrates. There is an outermost sealing layer which may comprise calcium aluminate, and on this sealing layer there can be provided a further TBC layer. Again the document does not disclose the application of prefabricated monolithic ceramic elements in the context of making such a layer structure.

Document US 5 630 314 A and document EP 2108 715 A2 disclose multilayer thermal protection systems applied to metallic substrates. They show ceramic outer layers with a columnar microstructure which is the result of applying the material by means of vapour deposition, for example EB-PVD. Those documents do also not disclose the application of prefabricated monolithic ceramic elements in the context of making such layer structures.

### SUMMARY OF THE INVENTION

The object of the present invention is thus to provide a thermal protection system that is capable of handling high temperatures and harsh environments as will be required of future gas turbines.

This is achieved by typically a four-layer metal/ceramic hybrid system on a metallic substrate (component, e.g. nickel-based superalloy). The system among other aspects relies on e.g. utilizing the current state of the art metal/BC/TBC systems and to augment their temperature capability by bonding a high temperature capable ceramic material able to withstand harsh GT environments to the metal/BC/TBC system.

Specifically, the present invention relates to a multilayer thermal protection system, in which a first ceramic layer (TBC layer) is attached via a bond coat layer on a metallic substrate. On the first ceramic layer there is provided at least one second ceramic layer attached to the first ceramic layer via a ceramic adhesive layer. The first ceramic layer is applied by plasma spraying and the second ceramic layer comprises monolithic ceramic elements adhesively attached by the ceramic adhesive layer to the first ceramic layer.

Monolithic ceramic elements are to be understood as pre-fabricated elements which can be in the form of tiles, columnar structures, block structures or the like, what is important is that they are pre-manufactured and already sintered prior to the application to the substrate. These monolithic ceramic elements are typically sintered at temperatures of around 1600°C and therefore do not undergo a further sintering process anymore when mounted in the machine.

Typically, the first plasma sprayed ceramic layer has a thickness in the range of 0.1 to 2 mm.

Typically the second ceramic layer, i.e. the monolithic ceramic elements have a thickness (measured perpendicular to the surface plane of the substrate) in the range of 2 to 35mm, preferably in the range of 5-10 mm.

According to one preferred embodiment, the first ceramic layer is a low-temperature ceramic layer and the second ceramic layer is a high temperature ceramic layer.

This means that the first ceramic layer normally has a temperature capability Tₘₐₓ up to and including a temperature of 1150°C, preferably up to and including a temperature of 1100°C, as for example the case for conventional TBC layer as outlined above.

The second ceramic layer, i.e. the monolithic ceramic elements, Preferentially has a higher temperature capability Tₘₐₓ than the first ceramic layer. This means that preferably the temperature capability Tₘₐₓ of the second ceramic layer is at least 100°C, preferably at least 200°C or even 300°C, larger than the temperature capability Tₘₐₓ of the first ceramic layer.

Normally the second ceramic layer has a temperature capability Tₘₐₓ of at least 1200°C, more preferably of at least 1500°C, even more preferably in the range of 1200-1750°C. Tₘₐₓ of the second layer is defined by the sintering, phase stability and environmental stability.

As outlined above, the temperature capability Tₘₐₓ of materials is defined specifically for industrial gas turbine applications as the maximum possible surface temperature for 24000h in gas turbine combustion gas environment without significant loss of functionality such as reduced thermal barrier effect due to spallation, strain tolerance due sintering, degradation due to environmental attack of combustion gas constituents, thermal phase stability.

The quantification of degradation for the determination of the temperature capability can be done by state of the art test and evaluation tools, e.g. X-ray diffraction, Knoop hardness, SEM, dilatometer, etc. as concerns the measurement of these quantities, reference is made to the following literature: ASTM C1326 - 08e1 Standard Test Method for Knoop Indentation Hardness of Advanced Ceramics; ASTM E831 Standard Test Method for Linear Thermal Expansion of Solid Materials by Thermomechanical Analysis; G.Witz, V. Shklover, W. Steurer, S. Bachegowda, H.-P. Bossmann: MONITORING THE PHASE EVOLUTION OF YTTRIA STABILIZED ZIRCONIA IN THERMAL BARRIER COATINGS USING THE RIETVELD METHOD, Journal of the American Ceramic Society, Volume 90 Issue 9, Pages 2935 - 2940 (2007).

Using these quantities the temperature capability can be determined as described in the above mentioned publication from Witz. A time-temperature-relation was established for the temperature range 1100-1400°C for exposure times 1-1400h. The measured kinetics of phase evolution (or phase stability) was combined with the temperature dependence using the Arrhenius equation for thermally activated processes. Tₘₐₓ for a certain time of exposure can be extrapolated from these data. This approach is applicable also for sintering and environmental stability. For this purpose the individual layers can be tested and investigated as stand-alone layers.

The nature of the system ensures that the thermal mismatch between the adjacent layers is minimized to reduce internal stresses at the interfaces of the various layers.

Metal/BC/TBC systems have a limited temperature capability, by bonding an independent ceramic part that is capable handling higher temperature and having higher environmental resistance to hot gas exposed surface of the Metal/BC/TBC system, the system can be made to operate at temperatures above 1400°C.

The top ceramic part can be a single, multilayer or graded system prepared by any state of the art processes. This independent part is bonded to the metal/BC/TBC system. The preferred bonding method being adhesive, achieved by means of ceramic cement pastes.

The cements paste used in this context preferably have a solid to liquid ratio of in the range of 60-90 wt% (equalling roughly 35-70 vol%).

The present invention also relates to a method for making a multilayer thermal protection system as defined above and further below.

The wet cements can be applied to the surfaces of the parts for example using a sponge. The cement thickness is preferably less than 0.5mm, even more preferably the cement thickness is less than 0.1 mm, or in the range of 0.05mm.

The cements are preferably dried at room temperature for 4 to 12hr. Preferably the drying takes place under a compressive load in the range of 70 to 850 g/cm2 preferentially applied perpendicularly to the joint face ("wet loading"). The load can for example be produced by using gravity and steel plates as weights. The wet loading can have significant influences on the joint adhesion.

The cements can be cured in atmospheric box furnaces, preferably at a temperature in the range of 500 to 600°C and more preferably within a timespan of 5 to 15h. Preferably curing takes place with a curing load of up to 250 g/cm2 applied perpendicularly to the joint face. Also a staged during protocol as possible. It is for example possible to cure cements according to yet another preferred embodiment in steps of in the range of 90-100°C for 0.5-3 h followed by curing at a temperature of 200-300°C for 0.5-3 h followed by curing at a temperature in the range of 300-400°C for 0.5-3 h with a curing load of up to 250 g/cm2 applied perpendicular to the joint face. For specific applications/materials a final curing step of a 500-700°C for 3-6 h can be used.

According to a preferred embodiment, the second ceramic layer has a thickness in the range of 2-20 mm, preferably in the range of 5-10 mm. The second ceramic layer (but also the first ceramic layer) can be a single layer, multilayer or graded layer system.

According to a further preferred embodiment, the second ceramic layer so the monolithic ceramic elements are alpha-alumina based and/or magnesia based, wherein preferably elements of the second ceramic layer essentially consist of alpha alumina and/or magnesia. They can be produced using methods according to the state-of-the-art, where starting from this material a green compact is produced which is subsequently sintered, normally at temperatures around 1600°C.

The ceramic plates can be cut with a low speed diamond saw or by water jet to avoid crack initiation at the cutting edges. Before joining both surfaces can be abraded with SiC paper and subsequently cleaned ultrasonically in ethanol to improve adhesion of the cement.

These prefabricated elements are subsequently joined to the first (TBC) layer using the adhesive, braze etc. on a TBC coated metallic substrate.

Multilayer thermal protection system can be **characterised in that** the porosity of the first layer is in the range of 5-25%.

Preferentially, second ceramic layer is a multilayer structure with at least one dense surface exposed layer with a porosity of below 30%, preferably in the range of 0-25% or 5-10%, and with at least one porous interface layer (can be of the same constitution or of a different constitution) with a porosity of above 30%, preferably in the range of 50-90%, at the interface with the first ceramic layer.

Yet another preferred embodiment is **characterised in that** the second ceramic layer comprises at least one surface exposed layer and at least one underlying additional layer, and the surface exposed layer is structured as a two-dimensional array of tiles separated by gaps.

The gaps between the tiles can be slots with parallel sidewalls perpendicular to or inclined with respect to the surface plane of the substrate. In this case the sidewalls of the tiles are planes perpendicular to the surface plane or inclined with respect to the surface plane, respectively.

In the alternative is also possible to have sidewalls of the tiles which have an interlocking shape, such as key and slot joints or tongue and groove joints.

The tiles structure of the most surface exposed layer allows to reduce thermal expansion problems and allows to keep local damage due to foreign object impact (FOD) to a minimum. The tiles can be of rectangular, quadratic, rhombic or hexagonal shape. Preferably, in particular in case of a regular hexagonal shape (honeycomb) the lateral extension of a tile in both dimensions is in the range of 2-35 mm, preferably in the range of 10-20 mm.

The ceramic adhesive layer can be a refractory cement paste layer. It can be calcium aluminate based, or can even essentially consist of calcium aluminate.

According to a preferred embodiment, the bond coat is composed of MCrAlY, where M = Co, Ni or Co/Ni, and/or of PtAl.

Preferably the composition of the bond coat is given as 25Cr 5.5Al 2.5Si 1Ta 0.6Y with the remainder Ni, or as 12Co 20Cr 11Al 2.7Si 1Ta 0.6Y with the remainder Ni.

As mentioned above, typically the first ceramic layer is a conventional TBC layer, and can for example be based on or consist of 7YSZ. (ZrO₂, stabilised with 7 wt.-% Y₂O₃).

In order to ensure mechanical bonding, grooves, ribs, anchors and roughening can be utilized. this means, that, according to a preferred embodiment, at at least one of the interfaces to the ceramic adhesive layer mechanical bonding aids are provided, preferably in the form of grooves, ribs, anchors, and/or surface texture (roughening) provided in the first ceramic layer and/or the second ceramic layer.

Furthermore the present invention relates to the use of a thermal barrier coating layer system as outlined above for coating at least a part of a component exposed to temperatures above 1400°C.

More specifically, it relates to the use of a thermal barrier coating layer system as outlined above for coating at least partially components exposed to the hot gas path in thermal engines, in particular in gas turbines, preferably exposed to hot gases with temperatures above 1400°C.

Such a thermal barrier coating layer system can for example be used for selectively coating only the most temperature exposed parts of gas turbine components exposed to the hot gas path, while surrounding parts are coated with a thermal barrier coating system consisting of a thermal barrier coating layer attached to the metallic substrate by a bond coat layer.

Further embodiments of the present invention are outlined in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic cut through a barrier coating according to the invention perpendicular to the plane of the component with the barrier coating according to a first embodiment;
- Fig. 2: shows a schematic cut through a barrier coating according to the invention perpendicular to the plane of the component with the barrier coating according to a second embodiment;
- Fig. 3: a) shows a schematic representation of a top view onto a honeycomb tile structure of the barrier coating, b) shows a schematic representation of a cut perpendicular to the plane of the substrate with planar surfaces of the sidewalls of the tiles and c) shows a schematic representation of a cut perpendicular to the plane of the substrate with interlocking surfaces of the sidewalls of the tiles;
- Fig. 4: shows an open cell alpha-alumina joined to 7YSZ prior to exposure to thermal cycling (a) and thermal cycling of open cell alpha-alumina joined to 7YSZ during cooling down cycle; and
- Fig. 5: shows a 20vol.% porous alpha-alumina joined to 7YSZ.

### DESCRIPTION OF PREFERRED EMBODIMENTS

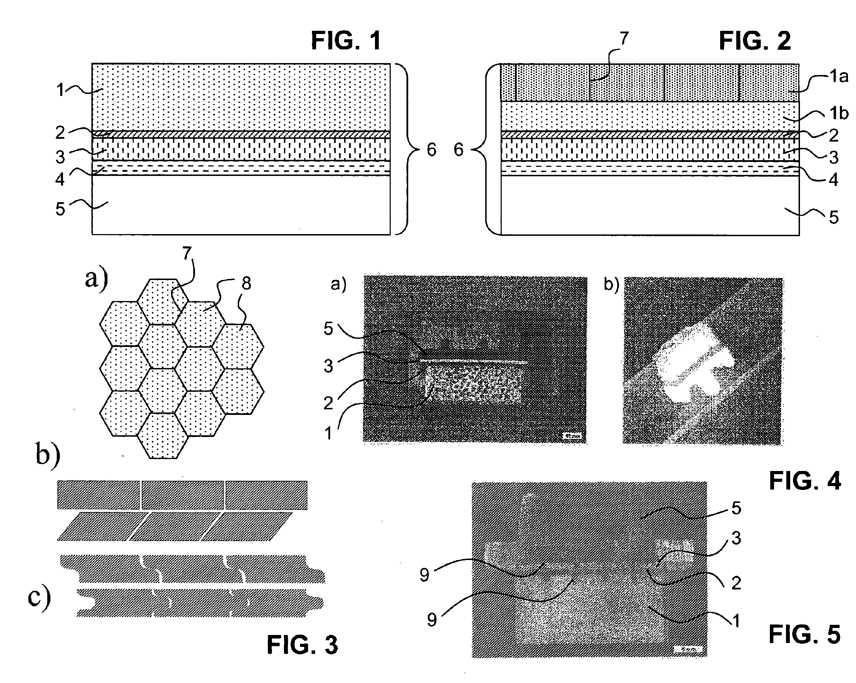

Referring to the drawings, which are for the purpose of illustrating the present preferred embodiments of the invention and not for the purpose of limiting the same, figure 1 shows a hybrid metal/ceramic structure 6 composed of at least four layers for use in high temperature environments such as GT's. The structure is made of load bearing superalloy material 5, an oxidation/corrosion resistant bondcoat 4, a low temperature ceramic layer 3 resistant up to temperatures of 1150°C (may also be a multilayer structure), a ceramic adhesive layer 2 and high temperature ceramic part or layer 1, with temperature capability up to 1750°C.

The metallic substrate 5 is a Ni-based superalloy, the bondcoat layer 4 is composed either of a MCrAlY or PtAl system, the low temperature ceramic layer 3 or TBC layer is based on or consists of 7YSZ and the adhesive layer 2 is a refractory cement paste normally a calcium aluminate based. The high temperature resistant ceramic part 1 can be a single, multilayer or graded system prepared by processes known in the art such as vapour deposition, sol gel processes, powder deposition, direct a position, plasma spray processes and the like. The high temperature resistant ceramic layer 1 has a thickness of at least 2 mm and up to 20 mm, preferred thickness is between 5 and 10 mm.

The ceramic part 1 is preferably alpha alumina based and/or magnesia based. The ceramic part 1 can be gas tight (closed porosity in the range of 0-10%), or have open plus closed porosity ranging from 15%-90%.

The layered system can, as illustrated in figure 2, have a porous layer 1b at the interface with the TBC, ensuring strain tolerance and have a dense layer 1a at the surface exposed to the combustion gases to provide erosion resistance.

The dense outer layer 1a can be, as illustrated in figure 3a, giving a honeycomb tile structure in a top view, composed of individual tiles separated by a small gaps or intentional cracks 7 designed so as to ensure reduced matter loss in case of foreign object damage and to reduce the strains in the layer due to thermal expansion mismatch linked to the temperature gradient and the different thermal expansion coefficient in the system. The typical tile size being 25mm x 25mm, so as to minimize the risk of foreign object damage.

As can be seen from figure 3 b in the top part thereof, the sidewalls of the tiles can be straight walls perpendicular to the surface plane of the substrate. In the bottom representation of figure 3 b modified structure is shown in which the sidewalls are inclined with respect to the surface plane of the substrate. This inclination, in particular if designed such that hot gases flowing across the surface cannot easily enter the slots, can be advantageous as the hot air cannot easily penetrate through the slots. As can be see from figure 3 c, showing to different interlocking sidewalls structures for the tiles, it is possible to have like labyrinth groove structures which on the one hand can increase mechanical stability and on the other hand can further prevents penetration of hot air to more hot air sensitive layers buried below the tiles.

### Experimental part:

A first series of experiments was performed using a high grade calcium aluminate cement to join 7YSZ coating to an open-cell alpha-alumina monolithic ceramic with the porosity of about 80 percent prepared by a sol-gel process.

The cements paste used had a solid to liquid ratio of ∼60-90 wt% (∼35-70 vol%). The wet cements were applied to the surfaces of the parts with a sponge. The cement thickness were less than 0.5mm typically in the range of or less than 0.05mm.

The cements were dried at room temperature for 4 to 12hr in laboratory atmosphere with a compressive load from 70 to 850 g/cm2 applied perpendicular to the joint face ("wet loading"). The load was produced by using gravity and steel plates as weights. The wet loading had a significant influence on the joint adhesion.

The cements were cured in atmospheric box furnaces at temperature from 500 to 600°C for 5 to 15hr with a curing load of 0.0 to 250 g/cm2 applied perpendicular to the joint face. Some cements were cured in steps of 93°C for 2hr plus 260°C for 2hr plus 372°C for 2hr with a curing load of 0.0 to 250 g/cm2 applied perpendicular to the joint face. Sometimes a final curing step of 600°C for 5 hrs was used.

The ceramic plates were cut with a low speed diamond saw or by water jet to avoid crack initiation at the cutting edges. Before joining both surfaces were abraded with SiC paper and subsequently cleaned ultrasonically in ethanol to improve adhesion of the cement.

### The sample was produced as follows:

On a substrate of nickel superalloy a NiCoCrAlY bondcoat (about 0.3mm thickness) and a 7YSZ coating layer (about 0.8mm thickness) was produced by plasma spray processes. A thin layer (about 0.1mm) of the refractory cement was applied manually to the surface of this TBC layer and on an open cell alpha alumina monolithic ceramic (about 20mm thickness). Subsequently both pieces were joined putting the cement layers together. After curing 24h in humid environment, assembly was heat treated with the following steps: 60°C/2h, 120°C/2h, 300°C/2h, 1000°C/20h. The heating and cooling rate for the last step was about 50K/h.

The corresponding structure is shown in Figure 4a. Then, the assembly was thermal cycled (23h dwell time at 1000°C and 1h dwell time at room temperature) for 2 weeks and survived as shown in Figure 4b during the cooling down cycle.

Subsequently a second series of experiments was conducted using the same substrate/Bondcoat/TBC system and the same refractory cement but as second layer 1 an alpha-alumina monolithic part with 20% porosity and 12mm thickness was used. Grooves 9 were made on the mating surfaces of the TBC 3 and the alpha-alumina 1 in order to improve the mechanical interlocking of the cement, as shown in figure 5. The assembly was thermal cycled for short-term duration as in the first series of experiments at elevated temperature.

The sample was produced similarly as in case of the above first series of experiments.

### LIST OF REFERENCE SIGNS

- 1: second ceramic layer, high temperature ceramic top layer
- 1a: dense surface exposed layer part of 1
- 1b: porous interface layer of 1
- 2: ceramic adhesive layer
- 3: first ceramic layer, low-temperature ceramic layer
- 4: bond coat layer
- 5: metallic substrate, superalloy
- 6: hybrid metal/ceramic structure
- 7: gap between tiles
- 8: honeycomb tiles
- 9: slots in 1 and/or 3

## Claims

1. Multilayer thermal protection system, in which a plasma sprayed first ceramic layer (3) is attached via a bond coat layer (4) on a metallic substrate (5), wherein on the first ceramic layer (3) there is provided at least one second ceramic layer (1) attached to the first ceramic layer (3) via a ceramic adhesive layer (2), wherein the second ceramic layer (1) comprises monolithic ceramic elements adhesively attached to the first ceramic layer (3), wherein the monolithic ceramic elements are pre-fabricated elements selected from the group of tiles, columnar structures, block structures, or combinations thereof and said pre-fabricated elements are premanufactured and already sintered prior to the application to the substrate (5).

2. Multilayer thermal protection system according to claim 1, wherein the first ceramic layer (3) has a thickness in the range of 0.1 to 2 mm, and wherein the second ceramic layer (1) has a thickness in the range of 2 to 35mm.

3. Multilayer thermal protection system according to any of the preceding claims, wherein the first ceramic layer (3) has a temperature capability (Tₘₐₓ) up to and including a temperature of 1150°C, and wherein the second ceramic layer (1) has a higher temperature capability (Tₘₐₓ) than the first ceramic layer (3), wherein the temperature capability (Tₘₐₓ) of the second ceramic layer (1) is at least 100°C larger than the temperature capability (Tₘₐₓ) of the first ceramic layer (3), wherein preferably the second ceramic layer (1) has a temperature capability (Tₘₐₓ) of at least 1200°C, wherein preferably the second ceramic layer (1) is a single layer, multilayer or graded layer system.

4. Multilayer thermal protection system according to any of the preceding claims, wherein the second ceramic layer (1) is alpha-alumina based and/or magnesia based.

5. Multilayer thermal protection system according to any of the preceding claims , wherein the second ceramic layer (1) comprises at least one surface exposed layer (1a) and at least one underlying additional layer (1b), and wherein the surface exposed layer (1a) is structured as a two-dimensional array of tiles (8) separated by gaps (7), wherein the tiles are of rectangular, quadratic, rhombic or hexagonal shape, and wherein the lateral extension of a tile in both dimensions is in the range of 15-35 mm, wherein further the gaps (7) between the tiles (8) are slots with parallel sidewalls perpendicular to or inclined with respect to the surface plane of the substrate, or are slots with interlocking shape.

6. Multilayer thermal protection system according to any of the preceding claims, wherein the ceramic adhesive layer (2) is a refractory cement paste layer.

7. Multilayer thermal protection system according to any of the preceding claims, wherein the metallic substrate (5) is a nickel-based superalloy.

8. Multilayer thermal protection system according to any of the preceding claims, wherein the bond coat is composed of MCrAlY, where M = Co, Ni or Co/Ni, and/or is composed of PtAl, wherein the composition of the bond coat is given as 25Cr 5.5A1 2.5Si 1Ta 0.6Y with the remainder Ni, or as 12Co 20Cr 11A1 2.7Si 1Ta 0.6Y with the remainder Ni.

9. Multilayer thermal protection system according to any of the preceding claims, wherein the first ceramic layer (3) is based on or consists of 7YSZ.

10. Multilayer thermal protection system according to any of the preceding claims, wherein at least at one interface to the ceramic adhesive layer (2) mechanical bonding aids are provided in the form of grooves, ribs, anchors, and/or surface texture provided in the bondcoat (4) and/or the first ceramic layer (3) and/or the adhesive layer (4) and/or the second ceramic layer (1).

11. Method for the production of a multilayer thermal protection system according to any of the preceding claims, comprising the steps of attaching a first ceramic layer (3) via a bond coat layer (4) on a metallic substrate (5), attaching on the first ceramic layer (3) via a ceramic adhesive layer (2) at least one second ceramic layer (1), wherein the first ceramic layer (3) is applied by plasma spraying and the second ceramic layer (1) comprises monolithic ceramic elements adhesively attached to the first ceramic layer (3), wherein the monolithic ceramic elements are pre-fabricated elements selected from the group of tiles, columnar structures, block structures, or combinations thereof and said pre-fabricated elements are premanufactured and already sintered prior to the application to the substrate (5), and wherein adhesive attachment is established using a cement, and a drying this cement at room temperature for 4 to 12hr under a compressive load in the range of 70 to 850 g/cm2 applied perpendicularly to the joint face, further followed by or replace/supplemented by curing at a temperature in the range of 500 to 600°C within a timespan of 5 to 15h, wherein curing takes place with a curing load of up to 250 g/cm2 applied perpendicularly to the joint face.

12. Method according to claim 11, wherein the pre-fabricated elements are sintered prior to the application to the substrate (5) at temperatures of around 1600°C so as not to undergo a further sintering process anymore when mounted in the machine.

13. Use of a multilayer thermal protection system according to any of the preceding claims 1-10 for coating at least a part of a component exposed to temperatures above 1400°C.

14. Use of a multilayer thermal protection system according to any of the preceding claims 1-10 for coating at least partially components exposed to the hot gas path in thermal engines, in particular in gas turbines, exposed to hot gases with temperatures above 1400°C.

15. Use of a thermal barrier coating layer system according to any of the preceding claims 1-10 or for selectively coating only the most temperature exposed parts of gas turbine components exposed to the hot gas path, while surrounding parts are coated with a thermal barrier coating system consisting of a thermal barrier coating layer attached to the metallic substrate (5) by a bond coat layer (4).

## Patentansprüche

1. Mehrschichtiges Wärmeschutzsystem, wobei eine plasmagespritzte erste Keramikschicht (3) durch eine Haftbrückenschicht (4) auf einem Metallsubstrat (5) befestigt ist, wobei auf der ersten Keramikschicht (3) mindestens eine zweite Keramikschicht (1) bereitgestellt ist, die an der ersten Keramikschicht (3) durch eine Keramikhaftschicht (2) befestigt ist, wobei die zweite Keramikschicht (1) monolithische Keramikelemente umfasst, die haftend an der ersten Keramikschicht (3) befestigt sind, wobei die monolithischen Keramikelemente vorgefertigte Elemente sind, ausgewählt aus der Gruppe bestehend aus Platten, Säulenstrukturen, Blockstrukturen oder Kombinationen davon, und die vorgefertigten Elemente vorfabriziert und vor dem Aufbringen auf das Substrat (5) schon gesintert sind.

2. Mehrschichtiges Wärmeschutzsystem nach Anspruch 1, wobei die erste Keramikschicht (3) eine Dicke im Bereich von 0,1 bis 2 mm aufweist und wobei die zweite Keramikschicht (1) eine Dicke im Bereich von 2 bis 35 mm aufweist.

3. Mehrschichtiges Wärmeschutzsystem nach einem der vorhergehenden Ansprüche, wobei die erste Keramikschicht (3) eine Temperaturfähigkeit (Tₘₐₓ) von bis zu und einschließlich einer Temperatur von 1150 °C aufweist und wobei die zweite Keramikschicht (1) eine höhere Temperaturfähigkeit (Tₘₐₓ) als die erste Keramikschicht (3) aufweist, wobei die Temperaturfähigkeit (Tₘₐₓ) der zweiten Keramikschicht (1) mindestens 100 °C höher ist als die Temperaturfähigkeit (Tₘₐₓ) der ersten Keramikschicht (3), wobei bevorzugt die zweite Keramikschicht (1) eine Temperaturfähigkeit (Tₘₐₓ) von mindestens 1200 °C aufweist, wobei bevorzugt die zweite Keramikschicht (1) ein Einschicht-, Mehrschicht- oder abgestuftes Schichtsystem ist.

4. Mehrschichtiges Wärmeschutzsystem nach einem der vorhergehenden Ansprüche, wobei die zweite Keramikschicht (1) auf alpha-Aluminiumoxid und/oder Magnesiumoxid basiert.

5. Mehrschichtiges Wärmeschutzsystem nach einem der vorhergehenden Ansprüche, wobei die zweite Keramikschicht (1) mindestens eine Schicht bloßgelegter Oberfläche (1a) und mindestens eine darunterliegende zusätzliche Schicht (1b) umfasst und wobei die Schicht bloßgelegter Oberfläche (1a) als zweidimensionale Anordnung von Platten (8) strukturiert ist, die durch Lücken (7) getrennt sind, wobei die Platten eine rechteckige, quadratische, rautenförmige oder hexagonale Gestalt aufweisen und wobei der laterale Fortsatz einer Platte in beiden Dimensionen im Bereich von 15 - 35 mm liegt, wobei des Weiteren die Lücken (7) zwischen den Platten (8) Schlitze mit parallelen Seitenwänden sind, die senkrecht zu oder geneigt mit Bezug auf die Oberflächenebene des Substrats liegen oder Schlitze mit formschlüssiger Gestalt sind.

6. Mehrschichtiges Wärmeschutzsystem nach einem der vorhergehenden Ansprüche, wobei die Keramikhaftschicht (2) eine hitzebeständige Zementpastenschicht ist.

7. Mehrschichtiges Wärmeschutzsystem nach einem der vorhergehenden Ansprüche, wobei das Metallsubstrat (5) eine Superlegierung auf Nickelbasis ist.

8. Mehrschichtiges Wärmeschutzsystem nach einem der vorhergehenden Ansprüche, wobei die Haftbrückenschicht aus MCrAlY besteht, wobei M = Co, Ni oder Co/Ni ist und/oder aus PtAl besteht, wobei die Zusammensetzung der Haftbrückenschicht als 25 Cr, 5,5 Al, 2,5 Si, 1 Ta, 0,6 Y angegeben ist, wobei der Rest Ni ist, oder als 12 Co, 20 Cr, 11 Al, 2,7 Si, 1 Ta, 0,6 Y angegeben ist, wobei der Rest Ni ist.

9. Mehrschichtiges Wärmeschutzsystem nach einem der vorhergehenden Ansprüche, wobei die erste Keramikschicht (3) auf 7YSZ basiert oder daraus besteht.

10. Mehrschichtiges Wärmeschutzsystem nach einem der vorhergehenden Ansprüche, wobei an mindestens einer Übergangsstelle zu der Keramikhaftschicht (2) mechanische Bindungshilfsmittel in Form von Rillen, Rippen, Verankerungsmöglichkeiten und/oder Oberflächentextur bereitgestellt sind, die in der Haftbrücken- (4) und/oder der ersten Keramikschicht (3) und/oder der Haftschicht (4) und/oder der zweiten Keramikschicht (1) bereitgestellt sind.

11. Verfahren zur Herstellung eines mehrschichtigen Wärmeschutzsystems nach einem der vorhergehenden Ansprüche, umfassend die Schritte des Befestigens einer ersten Keramikschicht (3) über eine Haftbrückenschicht (4) an einem Metallsubstrat (5), des Befestigens an der ersten Keramikschicht (3) über eine Keramikhaftschicht (2) mindestens einer zweiten Keramikschicht (1), wobei die erste Keramikschicht (3) durch Plasmaspritzen aufgebracht wird und die zweite Keramikschicht (1) monolithische Keramikelemente umfasst, die haftend an der ersten Keramikschicht (3) befestigt sind, wobei die monolithischen Keramikelemente vorgefertigte Elemente sind, ausgewählt aus der Gruppe bestehend aus Platten, Säulenstrukturen, Blockstrukturen oder Kombinationen davon, und die vorgefertigten Elemente vorfabriziert und vor dem Aufbringen auf das Substrat (5) schon gesintert sind und wobei das haftende Befestigen unter Anwendung eines Zements und Trocknens dieses Zements bei Raumtemperatur 4 bis 12 h lang unter einer Druckbelastung im Bereich von 70 bis 850 g/cm² eingerichtet wird, die senkrecht zur Verbindungsfläche aufgebracht wird, des Weiteren gefolgt von oder ersetzt/ergänzt durch Aushärten bei einer Temperatur im Bereich von 500 bis 600 °C innerhalb einer Zeitspanne von 5 bis 15 h, wobei das Aushärten unter einer Aushärtungslast von bis zu 250 g/cm², die senkrecht auf die Verbindungsfläche aufgebracht wird, erfolgt.

12. Verfahren nach Anspruch 11, wobei die vorgefertigten Elemente vor Aufbringen auf das Substrat (5) bei Temperaturen von etwa 1600 °C gesintert werden, sodass sie keinen weiteren Sintervorgang mehr durchmachen, wenn sie in der Maschine montiert sind.

13. Verwendung eines mehrschichtigen Wärmeschutzsystems nach einem der vorhergehenden Ansprüche 1 - 10 zum Beschichten mindestens eines Teils einer Komponente, die Temperaturen von über 1400 °C ausgesetzt wird.

14. Verwendung eines mehrschichtigen Wärmeschutzsystems nach einem der vorhergehenden Ansprüche 1 - 10 zum mindestens teilweisen Beschichten von Komponenten, die der Heißgasbahn in Wärmekraftmaschinen, insbesondere in Gasturbinen, ausgesetzt werden, die heißen Gasen mit Temperaturen von über 1400 °C ausgesetzt werden.

15. Verwendung eines Wärmebarriere-Beschichtungsschichtsystems nach einem der vorhergehenden Ansprüche 1 - 10 oder zum selektiven Beschichten nur der am stärksten temperaturausgesetzten Teile von Gasturbinenkomponenten, die der Heißgasbahn ausgesetzt sind, während die umgebenden Teile mit einem Wärmebarriere-Beschichtungssystem beschichtet sind, das aus einer Wärmebarriere-Beschichtungsschicht besteht, die an das Metallsubstrat (5) durch eine Haftbrückenschicht (4) befestigt ist.

## Revendications

1. Système de protection thermique multicouche, dans lequel une première couche de céramique pulvérisée au plasma (3) est attachée par l'intermédiaire d'une couche de fixation (4) à un substrat métallique (5), dans lequel il est prévu sur la première couche de céramique (3) au moins une deuxième couche de céramique (1) qui est attachée à la première couche de céramique (3) par l'intermédiaire d'une couche adhésive de céramique (2), dans lequel la deuxième couche de céramique (1) comprend des éléments de céramique monolithiques qui sont attachés de façon adhésive à la première couche de céramique (3), dans lequel les éléments de céramique monolithiques sont des éléments préfabriqués qui sont sélectionnés dans le groupe comprenant des tuiles, des structures colonnaires, des structures de bloc ou des combinaisons de celles-ci, et lesdits éléments préfabriqués sont pré-manufacturés et déjà frittés avant leur application sur le substrat (5).

2. Système de protection thermique multicouche selon la revendication 1, dans lequel la première couche de céramique (3) présente une épaisseur qui est comprise dans la gamme de 0,1 mm à 2 mm, et dans lequel la deuxième couche de céramique (1) présente une épaisseur qui est comprise dans la gamme de 2 mm à 35 mm.

3. Système de protection thermique multicouche selon l'une quelconque des revendications précédentes, dans lequel la première couche de céramique (3) présente une capacité de température (Tₘₐₓ) allant jusqu'à et y compris 1150°C, et dans lequel la deuxième couche de céramique (1) présente une capacité de température supérieure (Tₘₐₓ) à celle de la première couche de céramique (3), dans lequel la capacité de température (Tₘₐₓ) de la deuxième couche de céramique (1) est supérieure d'au moins 100°C à la capacité de température (Tₘₐₓ) de la première couche de céramique (3), dans lequel, de préférence, la deuxième couche de céramique (1) présente une capacité de température (Tₘₐₓ) d'au moins 1200°C, dans lequel, de préférence, la deuxième couche de céramique (1) est une couche simple, une couche multiple ou un système de couches progressif.

4. Système de protection thermique multicouche selon l'une quelconque des revendications précédentes, dans lequel la deuxième couche de céramique (1) est à base d'alumine alpha et/ou à base d'oxyde de magnésium.

5. Système de protection thermique multicouche selon l'une quelconque des revendications précédentes, dans lequel la deuxième couche de céramique (1) comprend au moins une couche exposée en surface (la), et au moins une couche supplémentaire sous-jacente (1b), et dans lequel la couche exposée en surface (1a) est structurée comme un réseau bidimensionnel de tuiles (8) séparées par des espaces (7), dans lequel les tuiles sont de forme rectangulaire, carrée, rhombique ou hexagonale, et dans lequel l'extension latérale d'une tuile dans les deux dimensions se situe dans la gamme de 15 mm à 35 mm, dans lequel en outre les espaces (7) entre les tuiles (8) sont des fentes présentant des parois latérales parallèles perpendiculaires ou inclinées par rapport au plan de surface du substrat, ou sont des fentes présentant une forme permettant un verrouillage mutuel.

6. Système de protection thermique multicouche selon l'une quelconque des revendications précédentes, dans lequel la couche adhésive de céramique (2) est une couche de pâte de ciment réfractaire.

7. Système de protection thermique multicouche selon l'une quelconque des revendications précédentes, dans lequel le substrat métallique (5) est un superalliage à base de nickel.

8. Système de protection thermique multicouche selon l'une quelconque des revendications précédentes, dans lequel la couche de fixation est composée de MCrAlY, où M = Co, Ni ou Co/Ni, et/ou est composée de PtAl, dans lequel la composition de la couche de fixation est donnée comme étant 25Cr 5,5Al 2,5Si 1Ta 0,6Y, le reste étant du Ni, ou comme étant 12Co 20Cr 11Al 2,7Si 1Ta 0,6Y, le reste étant du Ni.

9. Système de protection thermique multicouche selon l'une quelconque des revendications précédentes, dans lequel la première couche de céramique (3) est basée sur ou est constituée de 7YSZ.

10. Système de protection thermique multicouche selon l'une quelconque des revendications précédentes, dans lequel au moins à une interface avec la couche adhésive de céramique (2), des aides de liaison sont prévues sous la forme de rainures, de nervures, d'ancrages et/ou de texture de surface prévues dans la couche de fixation (4) et/ou dans la première couche de céramique (3) et/ou dans la couche adhésive (4) et/ou dans la deuxième couche de céramique (1).

11. Procédé de production d'un système de protection thermique multicouche selon l'une quelconque des revendications précédentes, comprenant les étapes de fixation d'une première couche de céramique (3) par l'intermédiaire d'une couche de fixation (4) sur un substrat métallique (5); fixation sur la première couche de céramique (3) par l'intermédiaire d'une couche adhésive de céramique (2) d'au moins une deuxième couche de céramique (1), dans lequel la première couche de céramique (3) est appliquée par pulvérisation au plasma, et la deuxième couche de céramique (1) comprend des éléments de céramique monolithiques qui sont attachés de façon adhésive à la première couche de céramique (3), dans lequel les éléments de céramique monolithiques sont des éléments préfabriqués qui sont sélectionnés dans le groupe comprenant des tuiles, des structures colonnaires, des structures de bloc ou des combinaisons de celles-ci, et lesdits éléments préfabriqués sont pré-manufacturés et déjà frittés avant leur application sur le substrat (5), et dans lequel une fixation adhésive est réalisée en utilisant un ciment, et par un séchage de ce ciment à la température ambiante pendant 4 à 12 heures sous une charge de compression dans la gamme de 70 g/cm² à 850 g/cm² qui est appliquée perpendiculairement à la face de jonction, suivi ou remplacé/complété par un durcissement à une température qui est comprise dans la gamme de 500°C à 600°C à l'intérieur d'un intervalle de temps de 5 à 15 heures, dans lequel le durcissement est exécuté avec une charge de durcissement allant jusqu'à 250 g/cm² appliquée perpendiculairement à la face de jonction.

12. Procédé selon la revendication 11, dans lequel les éléments préfabriqués sont frittés avant leur application au substrat (5) à des températures d'environ 1600°C de manière à ne plus subir aucun procédé de frittage supplémentaire lorsqu'ils sont montés dans la machine.

13. Utilisation d'un système de protection thermique multicouche selon l'une quelconque des revendications précédentes 1 à 10 pour revêtir au moins une partie d'un composant exposé à des températures supérieures à 1400°C.

14. Utilisation d'un système de protection thermique multicouche selon l'une quelconque des revendications précédentes 1 à 10 pour revêtir au moins partiellement des composants exposés au chemin de gaz chaud dans des moteurs thermiques, en particulier dans des turbines à gaz, exposés à des gaz chauds dont la température est supérieure à 1400°C.

15. Utilisation d'un système de couche faisant barrière thermique selon l'une quelconque des revendications précédentes 1 à 10 ou pour revêtir de façon sélective uniquement les parties les plus exposées à la température de composants de turbine à gaz exposés au chemin des gaz chauds, alors que les parties environnantes sont revêtues avec un système de revêtement faisant barrière thermique consistant en une couche de revêtement faisant barrière thermique qui est attachée au substrat métallique (5) par une couche de fixation (4).
